# EUROPÄISCHE PATENTSCHRIFT

(11) **EP 3 279 633 B1**
(45) Veröffentlichungstag und Bekanntmachung des Hinweises auf die Patenterteilung: **17.06.2020**
(21) Anmeldenummer: 17182909.6
(22) Anmeldetag: 25.07.2017
(51) Int. Cl.: G01M 13/023, G01M 13/025, G01N 3/32

(54) **PRÜFVORRICHTUNG ZUR PRÜFUNG ODER ERPROBUNG EINES PRÜFGEGENSTANDS**
TESTING DEVICE FOR TESTING OR EXPERIMENTING ON A TEST SPECIMEN
DISPOSITIF DE CONTRÔLE OU DE TEST D'UN ÉLÉMENT DE TEST

(30) Priorität: 03.08.2016 DE 102016009457
(43) Veröffentlichungstag der Anmeldung: 07.02.2018
(60) Teilanmeldung: 19214455.8
(73) Patentinhaber: MAN Truck & Bus SE, 80995 München (DE)
(72) Erfinder: HANSKY, Carl, 32549 Bad Oeynhausen (DE)
(74) Vertreter: v. Bezold & Partner Patentanwälte - PartG mbB

(56) Entgegenhaltungen:
- CN-A- 105 043 768
- DE-A1- 2 362 059
- DE-A1- 19 925 540
- DE-A1-102006 044 237
- DE-A1-102008 013 194
- DE-C- 731 259
- US-A- 3 031 886

## Beschreibung

Die Erfindung betrifft eine Prüfvorrichtung zur Prüfung oder Erprobung eines Prüfgegenstands, nämlich eines Riementriebs.

US 3 031 886 A offenbart eine Testvorrichtung für Ermüdungsmaterialien in Bezug auf Biegebeanspruchungen. DE 199 25 540 A1 offenbart eine Prüfeinrichtung für Radial- und Axialwellendichtungen. DE 23 62 059 A1 bezieht sich auf ein Verfahren und eine Vorrichtung zum Prüfen eines biegsamen, verzahnten Teils zur Kraftübertragung, z. B. eines Zahnriemens oder einer Zahnkupplung.

Zur Prüfung oder Erprobung von in Kraftfahrzeugen eingesetzten Riementrieben, z. B. Keil- und Keilrippenriemen, ist es wesentlich, dass die im Kraftfahrzeug auftretenden Betriebsbedingungen reproduzierbar und realitätsnah nachgebildet werden können. Eine wesentliche Schwierigkeit besteht hierbei darin, Drehungleichförmigkeiten reproduzierbar und realitätsnah nachzubilden. Ein Einzylinder-Viertaktmotor z. B. benötigt zwei Kurbelwellenumdrehungen, um ein Arbeitsspiel zu durchlaufen. Dies bedeutet, dass alle 720 ° Kurbelwinkel gezündet und die Kurbelwelle beschleunigt wird. Die dadurch entstehenden Schwingungen, insbesondere Torsionsschwingungen, werden als Hauptmotorordnung bezeichnet und haben Drehungleichförmigkeiten zur Folge. Die Ordnungszahl von selbiger hängt von den Ereignissen pro Kurbelwellenumdrehung ab. Die Hauptmotorordnung bei z. B. einem Einzylinder-Viertaktmotor ist die 0,5.

Aus der Praxis ist bekannt, Drehungleichförmigkeiten durch sogenannte vollvariable, hochdynamische Elektromotoren zu erzeugen. Derartige Elektromotoren sind allerdings relativ teuer.

Eine Aufgabe der Erfindung ist es, eine Prüfvorrichtung zur Prüfung oder Erprobung eines Prüfgegenstands, nämlich eines Riementriebs, zu schaffen, die relativ kostengünstig ist und vorzugsweise darüber hinaus unterschiedliche Drehungleichförmigkeiten erzeugen kann.

Diese Aufgabe kann mit den Merkmalen des unabhängigen Anspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft eine Prüfvorrichtung, insbesondere einen Prüfstand, zur Prüfung oder Erprobung eines Prüfgegenstands, nämlich eines Riementriebs.

Die Prüfvorrichtung zeichnet sich insbesondere dadurch aus, dass sie eine Kurbelschwingenkonstruktion und eine Getriebekonstruktion aufweist. Die Kurbelschwingenkonstruktion dient insbesondere zur Erzeugung einer Drehungleichförmigkeit und zur Übertragung der Drehungleichförmigkeit auf die Getriebekonstruktion.

Die Erfindung ermöglicht vorzugsweise, aus einer z. B. durch einen Elektromotor erzeugbaren gleichförmigen Drehbewegung unterschiedliche Drehungleichförmigkeiten zu generieren und dadurch zweckmäßig unterschiedliche Motorordnungen abzubilden.

Hieraus ergibt sich z. B. einer oder mehrere der folgenden Vorteile:
- Abbildung verschiedener Motorordnungen
- dauerfest
- kostengünstig

Die Kurbelschwingenkonstruktion ist abtriebseitig an die Getriebekonstruktion gekoppelt.

Die Getriebekonstruktion umfasst vorzugsweise zumindest zwei miteinander in Eingriff stehende Verzahnungselemente, z. B. zumindest zwei Zahnradstrukturen.

Die Getriebekonstruktion kann z. B. eine Übersetzungsverstelleinrichtung aufweisen, um unterschiedliche Übersetzungen zu realisieren, so dass unterschiedliche Drehungleichförmigkeiten für den Prüfgegenstand erzeugbar sind.

Die Prüfvorrichtung umfasst vorzugsweise einen Elektromotor zum Antrieb der Kurbelschwingenkonstruktion, wobei der Elektromotor vorzugsweise eine gleichförmige Drehbewegung auf die Kurbelschwingenkonstruktion aufbringt.

Die Kurbelschwingenkonstruktion kann z. B. zumindest drei Kurbelarme umfassen.

Die zumindest drei Kurbelarme können über vorzugsweise zumindest zwei Drehachsen aneinander gekoppelt sein, die sich z. B. im Wesentlichen parallel zueinander erstrecken.

Die Prüfvorrichtung kann z. B. eine Einstellkonstruktion (vorzugsweise eine Langlochkonstruktion oder ein mehrere Löcher aufweisendes Lochbild) aufweisen, um unterschiedliche Amplituden der durch die Kurbelschwingenkonstruktion generierten Drehungleichförmigkeit zu erzeugen.

Es ist möglich, dass ein erster Kurbelarm über eine erste Drehachse und ein zweiter Kurbelarm über eine zweite Drehachse an ein z. B. antriebseitiges Verzahnungselement der Getriebekonstruktion gekoppelt sind, vorzugsweise beabstandet voneinander und somit mit einer Exzentrizität.

Die erste Drehachse und die zweite Drehachse können sich z. B. im Wesentlichen parallel oder schräg zueinander erstrecken.

Der erste Kurbelarm und/oder der zweite Kurbelarm können über eine Einstellkonstruktion, z. B. eine Langlochkonstruktion oder ein mehrere Löcher aufweisendes Lochbild, an das vorzugsweise antriebseitige Verzahnungselement gekoppelt sein, um die Exzentrizität verändern zu können, insbesondere zwischen der ersten Drehachse und der zweiten Drehachse. Dadurch können z. B. unterschiedliche Amplituden der durch die Kurbelschwingenkonstruktion generierten Drehungleichförmigkeit erzeugt werden.

Es ist möglich, dass ein dritter Kurbelarm den ersten Kurbelarm mit dem zweiten Kurbelarm verbindet.

Die Getriebekonstruktion ist abtriebseitig mit einer Welle verbunden, über die die Drehungleichförmigkeit auf den Prüfgegenstand übertragbar ist, vorzugsweise eine Welle mit Riemenscheibe zur Ankopplung eines Riementriebs.

Die Welle kann vorzugsweise als Welle mit Freilauf ausgeführt sein, so dass z. B. die Drehungleichförmigkeit nur in eine Richtung auf den Prüfgegenstand übertragbar ist.

Das Merkmal "Verzahnungselement" kann im Rahmen der Erfindung z. B. ein Zahnrad umfassen, aber auch z. B. ein Element mit einer Verzahnung auf nur einem Kreisbogen und/oder andere Verzahnungsstrukturen.

Die zuvor beschriebenen Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine Vorderansicht einer Prüfvorrichtung gemäß einer Ausführungsform der Erfindung, und
- Figur 2: zeigt eine Seitenansicht der Prüfvorrichtung der Figur 1.

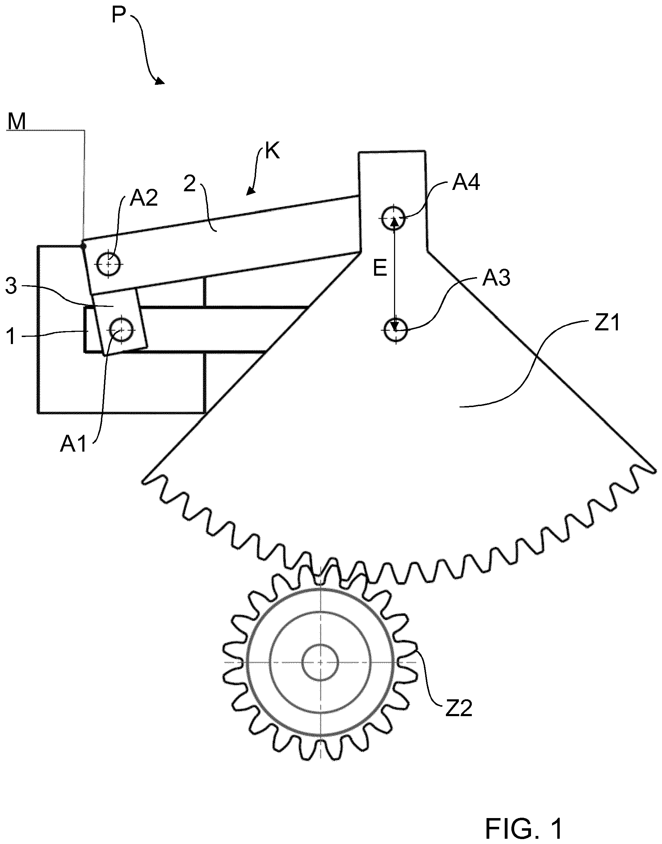

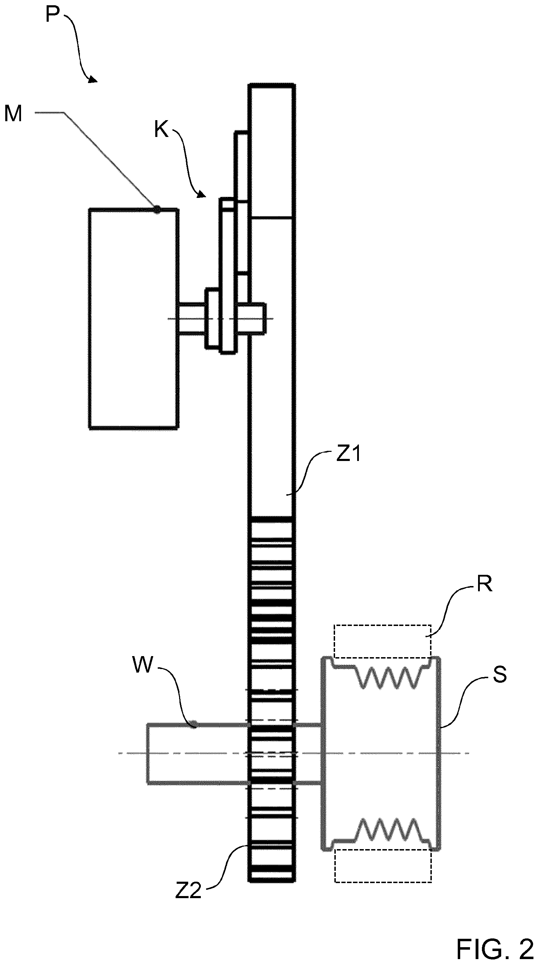

Figur 1 zeigt eine Prüfvorrichtung P zur Prüfung oder Erprobung eines Prüfgegenstands R, wobei Figur 2 eine zugehörige Seitenansicht der in Figur 1 gezeigten Prüfvorrichtung P zeigt. Die Prüfvorrichtung P wird nachfolgend unter gemeinsamer Bezugnahme auf die Figuren 1 und 2 beschrieben.

Im Betrieb von Verbrennungsmotoren entstehen durch die Zündung des Kraftstoffs charakteristische (Torsions-) Schwingungen, die als (Haupt-) Motorordnung bezeichnet werden und Drehungleichförmigkeiten zur Folge haben. Die Prüfvorrichtung P dient zweckmäßig zur Abbildung/Simulierung dieser (Haupt-) Motorordnung.

Die Prüfvorrichtung P umfasst eine Kurbelschwingenkonstruktion K und eine Getriebekonstruktion Z1, Z2. Die Kurbelschwingenkonstruktion K dient zur Erzeugung einer Drehungleichförmigkeit und zur Übertragung der Drehungleichförmigkeit auf die Getriebekonstruktion Z1, Z2.

Die Kurbelschwingenkonstruktion K ist abtriebseitig an die Getriebekonstruktion Z1, Z2 gekoppelt ist, wobei die Getriebekonstruktion Z1, Z2 zumindest zwei miteinander in Eingriff stehende Verzahnungselemente Z1, Z2 aufweist, nämlich ein antriebseitiges Verzahnungselement Z1 und ein abtriebseitiges Verzahnungselement Z2.

Die Getriebekonstruktion Z1, Z2 kann eine Übersetzungsverstelleinrichtung aufweisen, mittels der unterschiedliche Übersetzungen darstellbar sind, so dass unterschiedliche Drehungleichförmigkeiten für den Prüfgegenstand R erzeugbar sind.

Durch die Übersetzung (i) der Verzahnungselemente Z1, Z2 kann die Art der Motorordnung eingestellt werden (also z. B. ob 0,5. 1., 2., usw.).

Der Antrieb der Prüfvorrichtung P, insbesondere der Kurbelschwingenkonstruktion K, erfolgt über einen Elektromotor E, der eine im Wesentlichen gleichförmige Drehbewegung auf die Kurbelschwingenkonstruktion K aufbringt.

Die Kurbelschwingenkonstruktion K umfasst drei Kurbelarme 1, 2 und 3. Die drei Kurbelarme 1, 2 und 3 sind über zwei im Wesentlichen parallel verlaufende Drehachsen A1 und A2 aneinander gekoppelt.

Ein erster Kurbelarm 1 ist über eine erste Drehachse A3 an das Verzahnungselement Z1 gekoppelt und ein zweiter Kurbelarm 2 ist über eine zweite Drehachse A4 ebenfalls an das Verzahnungselement Z1 gekoppelt. Der erste Kurbelarm 1 und der zweite Kurbelarm 2 sind allerdings beabstandet voneinander und somit mit einer Exzentrizität E an das Verzahnungselement Z1 gekoppelt. Die erste Drehachse A3 und die zweite Drehachse A3 können sich parallel oder schräg zueinander erstrecken.

Die Prüfvorrichtung P kann eine Einstellkonstruktion umfassen, mittels der unterschiedliche Amplituden erzeugbar sind. Die Amplituden beziehen sich auf die durch die Kurbelschwingenkonstruktion K generierte Drehungleichförmigkeit.

Die Einstellkonstruktion kann z. B. realisiert werden, indem der erste Kurbelarm 1 und/oder der zweite Kurbelarm 2 über eine Langlochkonstruktion oder ein mehrere Löcher umfassendes Lochbild an das Verzahnungselement Z1 gekoppelt wird, wodurch die Exzentrizität E verstellbar ist, insbesondere vergrößert und verkleinert werden kann.

Ein dritter Kurbelarm 3 verbindet den ersten Kurbelarm 1 mit dem zweiten Kurbelarm 2.

Das Verzahnungselement Z2 ist mit einer Welle W verbunden, über die die Drehungleichförmigkeit auf den Prüfgegenstand R übertragbar ist. Die Welle W ist insbesondere eine Welle W mit Riemenscheibe S zur Ankopplung des Riementriebs R.

Die Welle W ist vorzugsweise als Welle W mit Freilauf ausgeführt, so dass vorzugsweise die Drehungleichförmigkeit in nur eine Richtung auf den Prüfgegenstand R übertragbar ist.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste

- 1: Kurbelarm
- 2: Kurbelarm
- 3: Kurbelarm
- A1: Drehachse
- A2: Drehachse
- A3: Drehachse
- A4: Drehachse
- E: Exzentrizität
- M: Elektromotor
- K: Kurbelschwingenkonstruktion
- P: Prüfvorrichtung
- R: Prüfgegenstand, insbesondere Riementrieb
- S: Riemenscheibe
- W: Welle
- Z1: Verzahnungselement
- Z2: Verzahnungselement

## Patentansprüche

1. Prüfvorrichtung (P) zur Prüfung oder Erprobung eines Prüfgegenstands (R), nämlich eines Riementriebs (R), **dadurch gekennzeichnet, dass** die Prüfvorrichtung (P) eine Kurbelschwingenkonstruktion (K) und eine Getriebekonstruktion (Z1, Z2) umfasst und die Kurbelschwingenkonstruktion (K) zur Erzeugung einer Drehungleichförmigkeit und zur Übertragung der Drehungleichförmigkeit auf die Getriebekonstruktion (Z1, Z2) dient, wobei die Getriebekonstruktion (Z1, Z2) mit einer Welle (W) verbunden ist, über die die Drehungleichförmigkeit auf den Prüfgegenstand (R) übertragbar ist, wobei
- die Kurbelschwingenkonstruktion (K) abtriebseitig an die Getriebekonstruktion (Z1, Z2) gekoppelt ist und die Getriebekonstruktion (Z1, Z2) zumindest zwei miteinander in Eingriff stehende Verzahnungselemente (Z1, Z2) umfasst, und/oder
- ein erster Kurbelarm (1) der Kurbelschwingenkonstruktion (K) über eine erste Drehachse (A3) und ein zweiter Kurbelarm (2) der Kurbelschwingenkonstruktion (K) über eine zweite Drehachse (A4) an ein antriebseitiges Verzahnungselement (Z1) der Getriebekonstruktion (Z1, Z2) gekoppelt sind und zwar beabstandet voneinander und somit mit einer Exzentrizität (E), wobei der erste Kurbelarm (1) und/oder der zweite Kurbelarm (2) über eine Einstellkonstruktion, vorzugsweise eine Langlochkonstruktion oder ein mehrere Löcher aufweisendes Lochbild, an das antriebseitige Verzahnungselement (Z1) der Getriebekonstruktion (Z1, Z2) gekoppelt ist, um eine Exzentrizität (E) verstellen zu können, so dass unterschiedliche Amplituden der durch die Kurbelschwingenkonstruktion (K) generierten Drehungleichförmigkeit erzeugbar sind.

2. Prüfvorrichtung (P) nach Anspruch 1, **dadurch gekennzeichnet, dass** die Getriebekonstruktion (Z1, Z2) eine Übersetzungsverstelleinrichtung umfasst, um unterschiedliche Übersetzungen zu realisieren, so dass unterschiedliche Drehungleichförmigkeiten für den Prüfgegenstand (R) erzeugbar sind.

3. Prüfvorrichtung (P) nach einem der vorhergehenden Ansprüche, **dadurch gekennzeichnet, dass** die Prüfvorrichtung (P) einen Elektromotor (M) zum Antrieb der Kurbelschwingenkonstruktion (K) umfasst, wobei vorzugsweise der Elektromotor (M) eine gleichförmige Drehbewegung auf die Kurbelschwingenkonstruktion (K) aufbringt.

4. Prüfvorrichtung (P) nach einem der vorhergehenden Ansprüche, **dadurch gekennzeichnet, dass** die Kurbelschwingenkonstruktion (K) zumindest drei Kurbelarme (1, 2, 3) umfasst.

5. Prüfvorrichtung (P) nach Anspruch 4, **dadurch gekennzeichnet, dass** die drei Kurbelarme (1, 2, 3) über zumindest zwei Drehachsen (A1, A2) aneinander gekoppelt sind, die sich vorzugsweise parallel zueinander erstrecken.

6. Prüfvorrichtung (P) nach einem der vorhergehenden Ansprüche, **dadurch gekennzeichnet, dass** die Prüfvorrichtung (P) eine Einstellkonstruktion umfasst, um unterschiedliche Amplituden der durch die Kurbelschwingenkonstruktion (K) generierten Drehungleichförmigkeit zu erzeugen.

7. Prüfvorrichtung (P) nach einem der vorhergehenden Ansprüche, **dadurch gekennzeichnet, dass** die erste Drehachse (A3) und die zweite Drehachse (A4) sich parallel oder schräg zueinander erstrecken.

8. Prüfvorrichtung (P) nach einem der vorhergehenden Ansprüche, **dadurch gekennzeichnet, dass** ein dritter Kurbelarm (3) den ersten Kurbelarm (1) mit dem zweiten Kurbelarm (2) verbindet.

9. Prüfvorrichtung (P) nach einem der vorhergehenden Ansprüche, **dadurch gekennzeichnet, dass** die Getriebekonstruktion (Z1, Z2) mit einer Welle (W) mit Riemenscheibe (S) zur Ankopplung eines Riementriebs (R) verbunden ist, über die die Drehungleichförmigkeit auf den Prüfgegenstand (R) übertragbar ist.

10. Prüfvorrichtung (P) nach einem der vorhergehenden Ansprüche, **dadurch gekennzeichnet, dass** die Welle (W) als Welle (W) mit Freilauf ausgeführt ist, so dass vorzugsweise die Drehungleichförmigkeit in nur einer Richtung auf den Prüfgegenstand (R) übertragbar ist.

## Claims

1. A testing apparatus (P) for testing or examining a test object (R), namely a belt drive (R), **characterized in that** the testing apparatus (P) comprises a crank rocker construction (K) and a gear mechanism construction (Z1, Z2), and the crank rocker construction (K) serves to generate a rotational non-uniformity and to transmit the rotational non-uniformity to the gear mechanism construction (Z1, Z2), the gear mechanism construction (Z1, Z2) being connected to a shaft (W), via which the rotational non-uniformity can be transmitted to the test object (R),
- the crank rocker construction (K) being coupled on the output side to the gear mechanism construction (Z1, Z2), and the gear mechanism construction (Z1, Z2) comprising at least two toothing elements (Z1, Z2) which are in engagement with one another, and/or
- a first crank arm (1) of the crank rocker construction (K) being coupled via a first rotational pivot (A3) and a second crank arm (2) of the crank rocker construction (K) being coupled via a second rotational pivot (A4) to a drive-side toothing element (Z1) of the gear mechanism construction (Z1, Z2), to be precise in a manner which is spaced apart from one another and therefore with an eccentricity (E), the first crank arm (1) and/or the second crank arm (2) being coupled to the drive-side toothing element (Z1) of the gear mechanism construction (Z1, Z2) via an adjusting construction, preferably a slot construction or a hole pattern which has a plurality of holes, in order for it to be possible for an eccentricity (E) to be adjusted, with the result that different amplitudes of the rotational non-uniformity which is generated by way of the crank rocker construction (K) can be produced.

2. The testing apparatus (P) according to Claim 1, **characterized in that** the gear mechanism construction (Z1, Z2) comprises a transmission ratio adjusting device, in order to realise different transmission ratios, with the result that different rotational non-uniformities can be produced for the test object (R).

3. The testing apparatus (P) according to either of the preceding claims, **characterized in that** the testing apparatus (P) comprises an electric motor (M) for driving the crank rocker construction (K), the electric motor (M) preferably applying a homogeneous rotational movement to the crank rocker construction (K).

4. The testing apparatus (P) according to one of the preceding claims, **characterized in that** the crank rocker construction (K) comprises at least three crank arms (1, 2, 3) .

5. The testing apparatus (P) according to Claim 4, **characterized in that** the three crank arms (1, 2, 3) are coupled to one another via at least two rotational pivots (A1, A2) which preferably extend parallel to one another.

6. The testing apparatus (P) according to one of the preceding claims, **characterized in that** the testing apparatus (P) has an adjusting construction, in order to produce different amplitudes of the rotational non-uniformity which is generated by way of the crank rocker construction (K).

7. The testing apparatus (P) according to one of the preceding claims, **characterized in that** the first rotational pivot (A3) and the second rotational pivot (A4) extend in parallel or obliquely with respect to one another.

8. The testing apparatus (P) according to one of the preceding claims, **characterized in that** a third crank arm (3) connects the first crank arm (1) to the second crank arm (2).

9. The testing apparatus (P) according to one of the preceding claims, **characterized in that** the gear mechanism construction (Z1, Z2) is connected to a shaft (W) with a pulley wheel (S) for coupling a belt drive (R), via which shaft (W) the rotational non-uniformity can be transmitted to the test object (R).

10. The testing apparatus (P) according to one of the preceding claims, **characterized in that** the shaft (W) is configured as a shaft (W) with the freewheel, with the result that the rotational non-uniformity can preferably be transmitted to the test object (R) in only one direction.

## Revendications

1. Arrangement de contrôle (P) destiné à contrôler ou à soumettre à essai une éprouvette (R), à savoir une transmission par courroie (R), **caractérisé en ce que** l'arrangement de contrôle (P) comporte une construction de bielle oscillante (K) et une construction d'engrenage (Z1, Z2), et la construction de bielle oscillante (K) sert à générer une uniformité de rotation et à transmettre l'uniformité de rotation à la construction d'engrenage (Z1, Z2), la construction d'engrenage (Z1, Z2) étant reliée à un arbre (W) par le biais duquel l'uniformité de rotation peut être transmise à l'éprouvette (R),
- la construction de bielle oscillante (K) étant couplée à la construction d'engrenage (Z1, Z2) du côté mené et la construction d'engrenage (Z1, Z2) comportant au moins deux éléments à denture (Z1, Z2) qui s'engrènent l'un avec l'autre, et/ou
- un premier bras de manivelle (1) de la construction de bielle oscillante (K) étant couplé par le biais d'un premier axe de rotation (A3) à un élément à denture (Z1) de la construction d'engrenage (Z1, Z2), et un deuxième bras de manivelle (2) de la construction de bielle oscillante (K) par le biais d'un deuxième axe de rotation (A4), et ce de manière espacée l'un de l'autre et de ce fait avec une excentricité (E), le premier bras de manivelle (1) et/ou le deuxième bras de manivelle (2) étant couplé à l'élément à denture (Z1) du côté entraînement de la construction d'engrenage (Z1, Z2) par le biais d'une construction de réglage, de préférence une construction à trou oblong ou un plan de perçage qui possède plusieurs trous, afin de pouvoir régler une excentricité (E) de sorte qu'il soit possible de produire différentes amplitudes de l'uniformité de rotation générée par la construction de bielle oscillante (K).

2. Arrangement de contrôle (P) selon la revendication 1, **caractérisé en ce que** la construction d'engrenage (Z1, Z2) comprend un dispositif de réglage de la démultiplication afin de réaliser des démultiplications différentes, de sorte qu'il soit possible de produire des uniformités de rotation différentes pour l'éprouvette (R).

3. Arrangement de contrôle (P) selon l'une des revendications précédentes, **caractérisé en ce que** l'arrangement de contrôle (P) comporte un moteur électrique (M) destiné à entraîner la construction de bielle oscillante (K), le moteur électrique (M) appliquant de préférence un mouvement de rotation uniforme à la construction de bielle oscillante (K).

4. Arrangement de contrôle (P) selon l'une des revendications précédentes, **caractérisé en ce que** la construction de bielle oscillante (K) comporte au moins trois bras de manivelle (1, 2, 3).

5. Arrangement de contrôle (P) selon la revendication 4, **caractérisé en ce que** les trois bras de manivelle (1, 2, 3) sont couplés les uns aux autres par le biais d'au moins trois axes de rotation (A1, A2), lesquels s'étendent de préférence parallèlement les uns aux autres.

6. Arrangement de contrôle (P) selon l'une des revendications précédentes, **caractérisé en ce que** l'arrangement de contrôle (P) comporte une construction de réglage afin de produire différentes amplitudes de l'uniformité de rotation générée par la construction de bielle oscillante (K).

7. Arrangement de contrôle (P) selon l'une des revendications précédentes, **caractérisé en ce que** le premier axe de rotation (A3) et le deuxième axe de rotation (A4) s'étendent parallèlement ou en biais l'un par rapport à l'autre.

8. Arrangement de contrôle (P) selon l'une des revendications précédentes, **caractérisé en ce qu'**un troisième bras de manivelle (3) relie le premier bras de manivelle (1) au deuxième bras de manivelle (2).

9. Arrangement de contrôle (P) selon l'une des revendications précédentes, **caractérisé en ce que** la construction d'engrenage (Z1, Z2) est reliée par un arbre (W) à une poulie de courroie (S) pour l'accouplement d'une transmission par courroie (R) par le biais de laquelle l'uniformité de rotation peut être transmise à l'éprouvette (R).

10. Arrangement de contrôle (P) selon l'une des revendications précédentes, **caractérisé en ce que** l'arbre (W) est réalisé sous la forme d'un arbre (W) à roue libre, de sorte que l'uniformité de rotation ne peut être transmise à l'éprouvette (R) de préférence que dans une seule direction.
